# EUROPEAN PATENT APPLICATION

(11) **EP 1 614 926 A1**
(43) Date of publication of application: **11.01.2006**
(21) Application number: 05254285.9
(22) Date of filing: 07.07.2005
(51) Int. Cl.: F16D 69/02

(54) **Porous friction material with friction modifying layer**

(30) Priority: 09.07.2004 US 888054
(71) Applicant: BorgWarner Inc., Auburn Hills MI 48326 (US)
(72) Inventor: Chen, Yih-Fang, Lisle, Illinois 60532 (US); Lam, Robert C., Rochester, Michigan 48306 (US); Dong, Feng, Rochester, Michigan 48306 (US); Chavdar, Bulent, Rochester, Michigan 48306 (US)
(74) Representative: Lerwill, John

(57) **Abstract**

A friction material which includes a porous base material, at least one type of resin material, and at least one type of friction modifying particle is disclosed. The resin material is substantially uniformly dispensed throughout the base material and a layer of a predetermined amount of the friction modifying materials forms a porous top surface on the base material.

## Description

### TECHNICAL FIELD

The present invention relates to a porous fiction material having a first or lower layer comprising a porous base material and a second or top layer comprising at least one type of friction modifying particles. The friction material of the present invention has high coefficient of friction characteristics, very robust anti-shudder characteristics and extremely high heat resistance. The friction material also has improved strength, wear resistance and noise resistance.

### BACKGROUND ART

New and advanced continuous torque transmission systems, having continuous slip torque converters and shifting clutch systems are being developed by the automotive industry. These new systems often involve high energy requirements. Therefore, the friction materials technology must be also developed to meet the increasing energy requirements of these advanced systems.

In particular, a new high performance, durable friction material is needed. The new friction material must be able to withstand high speeds wherein surface speeds are up to about 65m/seconds. Also, the friction material must be able to withstand high facing lining pressures up to about 1500 psi. It is also important that the friction material be useful under limited lubrication conditions.

The friction material must be durable and have high heat resistance in order to be useful in the advanced systems. Not only must the friction material remain stable at high temperatures, it must also be able to rapidly dissipate the high heat that is being generated during operating conditions.

The high speeds generated during engagement and disengagement of the new systems mean that a friction material must be able to maintain a relatively constant friction throughout the engagement. It is important that the frictional engagement be relatively constant over a wide range of speeds and temperatures in order to minimize "shuddering" of materials during braking or the transmission system during power shift from one gear to another. It is also important that the friction material have a desired torque curve shape so that during frictional engagement the friction material is noise or "squawk" free.

In particular, transmission and torque-on-demand systems incorporate slipping clutches mainly for the fuel efficiency and driving comfort. The role of the slip clutch within these systems varies from vehicle launching devices, such as wet start clutches, to that of a torque converter clutches. According to the operating conditions, the slip clutch can be differentiated into three principle classes: (1) Low Pressure and High Slip Speed Clutch, such as wet start clutch; (2) High Pressure and Low Slip Speed Clutch, such as Converter Clutch; and (3) Extreme Low Pressure and Low Slip Speed Clutch, such as neutral to idle clutch.

The principal performance concerns for all applications of the slip clutch are the prevention of shudder and the energy management of the friction interface. The occurrence of shudder can be attributed to many factors including the friction characteristics of the friction material, the mating surface's hardness and roughness, oil film retention, lubricant chemistry and interactions, clutch operating conditions, driveline assembly and hardware alignment, and driveline contamination. The friction interface energy management is primarily concerned with controlling interface temperature and is affected by the pump capacity, oil flow path and control strategy. The friction material surface design also contributes to the efficiency of interface energy management.

Previously, asbestos fibers were included in the friction material for temperature stability. Due to health and environmental problems, asbestos is no longer being used. More recent friction materials have attempted to overcome the absence of the asbestos in the friction material by modifying impregnating paper or fiber materials with phenolic or phenolic-modified resins. These friction materials, however, do not rapidly dissipate the high heat generated, and do not have the necessary heat resistance and satisfactory high coefficient of friction performance now needed for use in the high speed systems currently being developed.

The Kearsey U.S. Patent No. 5, 585,166 describes a multi layer friction lining having a porous substrate layer (cellulose and synthetic fibers, filler and thermoset resin) and a porous friction layer (nonwoven synthetic fibers in a thermoset resin) where the friction layer has a higher porosity than the substrate layer.

The Seiz U.S. Patent No. 5,083,650 reference involves a multi-step impregnating and curing process; i.e., a paper impregnated with a coating composition, carbon particles are placed on the paper, the coating composition in the paper is partially cured, a second coating composition is applied to the partially cured paper, and finally, both coating compositions are cured.

In other friction materials, metallic fibers combined with carbon materials were included in the friction material for wear resistance. For example, Fujimaki et al. U.S. Patent No. 4,451,590 describes a friction material having metallic fibers, filler, carbon particles, carbon fibers and phenolic resin. However, the metallic based friction materials do not have sufficient porosity and compressibility to be capable of high fluid permeation capacity during use. Also, the metallic based friction materials are not sufficiently resilient or elastic, yet resistant to compression set to be capable of withstanding high facing lining pressures of up to about 1500 psi (approximately 105 kg/cm²). The metallic based friction material also is not capable of withstanding high surface speeds of up to about 65 m/second which are generated during engagement and disengagement of the new transmission and braking systems.

Various paper based fibrous materials have been developed that are co-owned by the assignee herein, BorgWarner Inc., for use in friction materials. These references are fully incorporated herein by reference.

In particular, Lam et al., U.S. Patent No. 5,998,307 relates to a friction material having a primary fibrous base material impregnated with a curable resin where the porous primary layer comprises at least one fibrous material and a secondary layer comprises carbon particles covering at least about 3 to about 90% of the surface of the primary layer.

The Lam et al., U.S. Patent No. 5,858,883 relates to a base material having a primary layer of less fibrillated aramid fibers, synthetic graphite, and a filler, and a secondary layer comprising carbon particles on the surface of the primary layer.

The Lam et al., U.S. Patent No. 5,856,244 relates to a friction material comprising a base impregnated with a curable resin. The primary layer comprises less fibrillated aramid fibers, synthetic graphite and filler; the secondary layer comprises carbon particles and a retention aid.

The Lam et al. U.S. Patent No. 5,958,507 relates to a process for producing a friction material where about 3 to about 90% of at least one surface of the fibrous material which comprises less fibrillated aramid fibers is coated with carbon particles.

The Lam, U.S. Patent No. 6,001,750 relates to a friction material comprising a fibrous base material impregnated with a curable resin. The porous primarily layer comprises less fibrillated aramid fibers, carbon particles, carbon fibers, filler material, phenolic novoloid fibers, and optionally, cotton fibers. The secondary layer comprises carbon particles which cover the surface at about 3 to about 90% of the surface.

Yet another commonly owned patent application, Serial No. 09/707,274, now allowed, relates to a paper type friction material having a porous primary fibrous base layer with friction modifying particles covering about 3 to about 90% of the surface area of the primary layer.

In addition, various paper type fibrous base materials are described in commonly owned BorgWarner Inc. Lam et al., U.S. Patent Nos. 5,753,356 and 5,707,905 which describe base materials comprising less fibrillated aramid fibers, synthetic graphite and filler, which references are also fully incorporated herein by reference.

Another commonly owned patent, the Lam, U.S. Patent No. 6,130,176, relates to non-metallic paper type fibrous base materials comprising less fibrillated aramid fibers, carbon fibers, carbon particles and filler.

For all types of friction materials, in order to be useful in "wet" applications, the friction material must have a wide variety of acceptable characteristics. The friction material must have good anti-shudder characteristics; have high heat resistance and be able to dissipate heat quickly; and, have long lasting, stable and consistent frictional performance. If any of these characteristics are not met, optimum performance of the friction material is not achieved.

It is also important that a suitable impregnating resin be used in the friction material in order to form a high energy application friction material. The friction material must have good shear strength during use when the friction material is infused with brake fluid or transmission oil during use.

Accordingly, it is an object of the present invention to provide an improved friction material with reliable and improved properties compared to those of the prior art.

A further object of this invention is to provide a friction materials with improved "anti-shudder", "hot spot" resistance, high heat resistance, high friction stability and durability, and strength.

### IN THE DRAWINGS

Fig. 1. is a schematic diagram showing a porous friction material having a porous fibrous base material and at least one type of friction modifying particle forming a top layer.
Fig. 2 is an SEM image of deposit surface at 500 magnification for Ex. 1.
Fig. 3 is a graph showing the slope versus slipping time for Compar. Z, Compar. E, Compar. G, and Ex. 1.
Figs. 4a and 4b are graphs showing the coefficient of friction versus speed (rpm) for Compar. I (Fig. 4a) at Ex. 1 (Fig. 4b) 527 Kpa, 1054 Kpa, and 1580 Kpa.
Figs. 5a and 5b show a durability test comparison between the Compar. Z and Ex. 1 formulations.

### SUMMARY OF THE INVENTION

The present invention relates to a friction material having a first layer that comprises a porous base material and a second layer that comprises at least one type of friction modifying particle on a top surface of the base material.

The second layer is deposited on the first layer such that the second layer has a permeability lower than the first layer. The friction modifying particles are deposited on individual fibers or, if a nonwoven material, on randomly spaced portions of the surface of the friction material.

In one aspect, a friction material comprises a first layer having a porous base material and at least one type of resin material, and a second layer having at least one type of friction modifying particle at least partially covering a top surface of the porous base material. The second layer has an average thickness ranging from about 30 to about 400 µm, such that the second layer has a lower permeability than the first layer.

In certain embodiments, the layer of the friction modifying particles on the individual fibers and/or fillers comprising the porous base material has a thickness of about 50 to about 100 µm, and in certain embodiments, about 75 to about 85 µm on the individual fibers and/or filler particles that make up the first, or base, layer. In certain embodiments, the second layer has a lower permeability in the radial direction and a lower permeability in the normal direction than the porous base material.

Also, in certain embodiments, the friction modifying particles have an average size from about 0.1 to about 80 microns, and in certain embodiments, have an average size from about 0.5 to about 20 microns, and in certain other embodiments, from about 0.1 to about 0.15 microns.

The base material can have an average voids volume from about 60% to about 85%. In certain embodiments, the porous base layer comprises from about 70-85%, by weight, fibers and from about 10-30%, by wt., fillers. In certain embodiments, the porous base material can comprise about 80% fiber and about 20% filler.

In another aspect, the invention relates to a method for producing friction material where a porous base material is saturated with a saturant. the saturant can include at least one resin material, and at least one type of friction modifying particles, such that a plurality of the friction modifying particles form a layer on the individual fibers and/or fillers comprising the base material. In certain embodiments, the layer of friction modifying particles have an average thickness of about 30-400 µm, such that the second layer has a lower permeability than the first layer. Thereafter, the saturated base material is cured at a predetermined temperature for a predetermined period of time.

In another aspect, the method includes producing a friction material by preparing a saturant material comprising a mixture of at least one curable resin material and at least one type friction modifying particle, preparing a porous base material having a plurality of interstices dispersed therethrough, and saturating the porous base material with the saturant material. The friction modifying particles are deposited on the top surface of the base material such that the friction modifying particles are, in effect, deposited on individual fibers and/or individual fillers that make up the base material. At the same time, however the resin material in the saturant is substantially evenly dispersed throughout the base material. Thus, in certain embodiments, the friction modifying particles form a porous top layer on at least one side of the base material.

### DETAILED DESCRIPTION OF INVENTION

In order to achieve the requirements discussed above, many friction materials were evaluated for friction and heat resistant characteristics under conditions similar to those encountered during operation. Commercially available friction materials were investigated and proved not to be suitable for use in high energy applications.

According to the present invention, a friction material has a uniform dispersion of the curable resin throughout a porous base material and a substantially nonuniform layer of friction modifying materials on a top or outer surface of the porous base material.

In one aspect, the base material layer comprises a highly porous material such as a woven material. In other aspects the base material comprises a highly porous nonwoven material. In certain embodiments, the porous base material has a high fiber content in the range of about 75 to about 85%, and in certain embodiments, about 80%, by weight, based on the weight of the base material. The base material also has a filler content in the range of about 15 to about 25%, by weight, and in certain embodiments about 20%, based on the weight of the base material.

Various base materials are useful in the friction material of the present invention, including, for example, non-asbestos fibrous base materials comprising, for example, fabric materials, woven and/or nonwoven materials. Suitable fibrous base materials include, for example, fibers and fillers. The fibers can be organic fibers, inorganic fibers and carbon fibers. The organic fibers can be aramid fibers, such as fibrillated and/or nonfibrillated aramid fibers, acrylic fibers, polyester fibers, nylon fibers, polyamide fibers, cotton/cellulose fibers and the like. The fillers can be, for example, silica, diatomaceous earth, graphite, alumina, cashew dust and the like.

In other embodiments, the base material can comprise fibrous woven materials, fibrous non-woven materials, and paper materials. Further, examples of the various types of fibrous base materials useful in the present invention are disclosed in the above-referenced BorgWarner U.S. patents which are fully incorporated herein by reference. It should be understood however, that other embodiments of the present invention can include yet different fibrous base materials.

In certain other embodiments, the woven materials can be, for example, organic fibers such as aramid fibers, carbon, cotton/cellulose, glass, polyamid, ceramic, and the like fibers.

In certain embodiments, aramid fibers are useful in the woven material to provide a desirable pore structure to the friction material which, in turn, provides increased thermal resistance to the friction material. The fiber geometry not only provides increased thermal resistance, but also provides delamination resistance and squeal or noise resistance.

The use of less fibrillated aramid fibers in the base material improves the friction material's ability to withstand high temperatures. Less fibrillated aramid fibers generally have few fibrils attached to a core fiber. The use of the less fibrillated aramid fibers provides a friction material having a more porous structure; i.e., there are more and larger pores than if a typical fibrillated aramid fiber is used. The porous structure is generally defined by the pore size and liquid permeability. In a preferred embodiment, the base material defines pores ranging in mean average size from about 2.0 to about 25 microns in diameter. In certain embodiments, the mean pore size ranges from about 2.5 to about 8 microns in diameter and the friction material had readily available air voids of at least about 50% and, in certain embodiments, at least about 60% or higher.

Also, in certain embodiments, it is desired that the aramid fibers have a length ranging from about 0.5 to about 10 mm and a Canadian Standard Freeness (CSF) of greater than about 300. In certain embodiments, it is also desired to use less fibrillated aramid fibers which have a CSF of about 450 to about 550 preferably about 530 and greater; and, in other certain embodiments, about 580-650 and above and preferably about 650 and above. In contrast, more fibrillated fibers, such as aramid pulp, have a freeness of about 285-290.

The "Canadian Standard Freeness" (T227 om-85) means that the degree of fibrillation of fibers can be described as the measurement of freeness of the fibers. The CSF test is an empirical procedure which gives an arbitrary measure of the rate at which a suspension of three grams of fibers in one liter of water may be drained. Therefore, the less fibrillated aramid fibers have higher freeness or higher rate of drainage of fluid from the friction material than more fibrillated aramid fibers or pulp. Friction materials comprising the aramid fibers having a CSF ranging from about 430-650 (and in certain embodiments preferably about 580-640, or preferably about 620-640), provide superior friction performance and have better material properties than friction materials containing conventionally more fibrillated aramid fibers. The longer fiber length, together with the high Canadian freeness, provide a friction material with high strength, high porosity and good wear resistance. The less fibrillated aramid fibers (CSF about 530-about 650) have especially good long-term durability and stable coefficients of friction.

In particular embodiments, the base material has from about 10 to about 20%, and in certain embodiments about 15%, by weight, aramid fibers, when combined with a relatively high level of cotton or other cellulose type fibers.

In other particular embodiments, the woven material has from about 50 to about 60%, and in certain embodiments about 55%, by weight, aramid fibers, when combined with carbon fibers.

In certain embodiments, the presence of the carbon fibers in the primary layer aids in increasing the thermal resistance, maintaining a steady coefficient of friction and increasing the squeal resistance. When carbon fibers are used in the base material to provide good heat conduction such that the friction material has a desired heat resistance. In particular embodiments, the base material has from about 5 to about 20%, and in certain embodiments, about 10 to about 15%, by weight, carbon fibers.

In certain embodiments where carbon fibers are present in the primary layer, it is preferred that there is no cotton fiber content. In other embodiments with no carbon fiber content, a relatively high amount of cotton fibers, such as about 40-50%, by weight, in the primary layer of the base material improves the friction material's clutch "break-in" characteristics at an economical cost. In such embodiments, cotton fiber is added to the base material of the present invention to give the friction material higher coefficients of friction. In certain embodiments, about 40 to about 50%, and, in certain embodiments, about 45% cotton can also be added to the base material.

One example of a formulation for the primary layer of a base material comprises about 10 to about 50%, by weight, of a less fibrillated aramid fiber; about 10 to about 35%, by weight, of activated carbon particles; about 5 to about 20%, by weight, cotton fibers, about 2 to about 15%, by weight, carbon fibers; and, about 10 to about 35%, by weight, of a filler material. In certain embodiments, one particular formulation has found to be useful comprises about 35 to about 45%, by weight, less fibrillated aramid fibers; about 10 to about 20%, by weight, activated carbon particles; about 5 to about 15% cotton fibers; about 2 to about 10%, by weight, carbon fibers; and, about 25 to about 35%, by weight, filler.

Various fillers are also useful in the primary layer of the fibrous base material of the present invention. In particular, silica fillers, such as diatomaceous earth, are useful. However, it is contemplated that other types of fillers are suitable for use in the present invention and that the choice of filler depends on the particular requirements of the friction material.

In certain embodiments, cotton fiber is added to the fibrous base material of the present invention to give the fibrous material higher coefficients of friction. In certain embodiments, about 10 to about 20%, and, in certain embodiments, about 10% cotton can also be added to the fibrous base material.

One example of a formulation for the primary layer of a fibrous base material comprises from about 15 to about 25% cotton, about 40 to about 50% aramid fibers, about 10 to about 20% carbon fibers, about 5 to about 15% carbon particles, about 5 to about 15% celite, and, optionally about 0 to about 3% latex add-on.

In certain embodiments, the friction material comprises a base material which has a plurality of voids or interstices therein. The size of the voids in the fibrous base material can range from about 0.5 µm to about 20 µm.

In certain embodiments, the base material preferably has a void volume of about 60 to about 85% such that the fibrous base material is considered "porous" as compared to a "dense" base material.

In one aspect of the present invention relates to a friction material having a novel microstructured surface. The microstructured surface friction material has a higher coefficient of friction, even more robust anti-shudder characteristics, and extremely high heat resistance.

In one aspect the friction material has a porous or lofty and open base material. The base material has a low density and has a fiber architecture which allows a resin material to soak into the base material. The friction material has extremely good heat resistance and coefficient of friction characteristics which allows the friction material to respond well under thermal and mechanical stresses.

In another aspect, the "macro porous" fibrous material has a surface which is partially uncovered by the friction modifying materials. The large pores allow the friction modifying materials to settle into the voids or interstices in the base material. In the macro porous friction material of the present invention, the large pores allow contaminants in the fluid to pass through readily. As lubrications deteriorate over time, debris is generated. The friction material of the present invention keeps the friction behavior of the friction material constant.

The friction material thus comprises a top, or second, layer of friction modifying particles on a first, or top, surface of the fibrous base material. The presence of the friction modifying materials as a discontinuous, or randomly covered, top layer on the fibrous base material provides the friction material with many advantageous properties, including good oil retention properties.

When the fibrous base material has a higher mean pore diameter and fluid permeability, the friction material is more likely to run cooler or with less heat generated in a transmission due to better automatic transmission fluid flow throughout the porous structure of the friction material. During operation of a transmission system, the fluid tends, over time, to breakdown and form "oil deposits", especially at high temperatures. These "oil deposits" decrease the pore openings. Therefore, when the friction material initially starts with larger pores, there are more open pores remaining during the useful life of the friction material.

The friction modifying particles on the top surface of the fibrous base material provides an improved three-dimensional structure to the resulting friction material.

The layer of oil or fluid on the top friction modifying particle layer keeps the oil film on the surface, thus making it more difficult for the oil or fluid to initially penetrate into the friction material. The top friction modifying material layer holds the fluid lubricant on the surface and increases the oil retaining capacity of the friction material. The friction material of the present invention thus allows an oil film to remain on its surface. This also provides good coefficient of friction characteristics and good slip durability characteristics.

In certain embodiments, the average area of coverage of friction modifying particles forming the top layer is in the range of about 0 to about 50% of the surface area. In certain other embodiments, the average area of coverage ranges from about 40 to about 100%.

The friction modifying particles can have a size that can range from about 0.1 to about 80 microns in diameter, and in certain embodiments from about 0.5 to about 20 microns, and in other certain embodiments from about 0.1 to about 0.5 microns. In certain embodiments, the particles have an average particle diameter of about 12 µm. In certain embodiments, it has been discovered that if the friction modifying particle size is too large or too small, a desired optimum three-dimensional structure not achieved and, consequently, the heat dissipation and antishudder characteristics are not as optimum.

The amount of coverage of friction modifying particles on the fibrous base material is sufficiently random such that the layer of friction modifying particles on the individual fibers and/or fillers of the base material has a three dimensional structure. This three dimensional structure is comprised of individual particles of the friction modifying material on the individual fibers and/or fillers and in the voids or interstices between the individual fibers of the base material. In certain embodiments, the second layer (comprising the friction modifying particles) is less porous than the lower layer (of the fibrous base material).

Various types of friction modifying particles are useful as the second, or top, layer in the friction material. In one embodiment, useful friction modifying particles include silica particles. Other embodiments can have friction modifying particles such as resin powders such as phenolic resins, silicone resins epoxy resins and mixtures thereof. Still other embodiments can include partial and/or fully carbonized carbon powders and/or particles and mixtures thereof; and mixtures of such friction modifying particles. In certain embodiments, silica particles such as diatomaceous earth, Celite®, Celatom®, and/or silicon dioxide are especially useful. The silica particles are inexpensive inorganic materials which bond strongly to the base material. The silica particles provide high coefficients of friction to the friction material. The silica particles also provide the base material with a smooth friction surface and provides a good "shift feel" and friction characteristics to the friction material such that any "shudder" is minimized.

In still other embodiments, the friction modifying particles can also include other friction modifying particles such as metal oxides, nitrides, carbides, and mixtures thereof. It is within the contemplated scope of the present invention that these embodiments can include, for example, silica oxides, iron oxides, aluminum oxides, titanium oxides and the like; silica nitrides, iron nitrides, aluminum nitrides, titanium nitrides and the like; and, silica carbides, iron carbides, aluminum carbides, titanium carbides and the like.

In certain embodiments, the friction modifying materials comprising the second layer can have an irregular shape. The irregular shaped friction modifying particles act to hold a desired quantity of lubricant at the surface and in the "body" of the base material due to the capillary action of many invaginations on the surface of the irregularly shaped friction modifying particle. In certain embodiments, a silica material such as celite is useful as a friction modifying material since celite has an irregular or rough surface.

The resin material at least partially fills the voids in the fibrous base material. The resin material is substantially uniformly dispersed throughout the thickness of the base material.

In certain embodiments, the friction material can be impregnated using different resin systems. In certain embodiments, it is useful to use at least one phenolic resin, at least one modified phenolic-based resin, at least one silicone resin, at least one modified silicone resin, at least one epoxy resin, at least one modified epoxy resin, and/or combinations of the above. In certain other embodiments, a silicone resin blended or mixed with a phenolic resin in compatible solvents is useful.

Various resins are useful in the present invention. In certain embodiments, the resin can comprise phenolic or phenolic based resins, preferably so that the saturant material comprises about 45 to about 65 parts, by weight, per 100 parts, by weight, of the friction material. After the resin mixture has been applied to the base material and the base material has been impregnated with the resin mixture, the impregnated base material is heated to a desired temperature for a predetermined length of time to form a friction material. In certain embodiments, the heating cures the phenolic resin present in the saturant at a temperature of about 300°F. When other resins are present in the saturant, such as a silicone resin, the heating cures the silicone resin at a temperature of about 400°F. Thereafter, the cured friction material is adhered to a desired substrate by suitable means.

Various useful resins include phenolic resins and phenolic-based resins. It is to be understood that various phenolic-based resins which include in the resin blend other modifying ingredients, such as epoxy, butadiene, silicone, tung oil, benzene, cashew nut oil and the like, are contemplated as being useful with the present invention. In the phenolic-modified resins, the phenolic resin is generally present at about 50% or greater by weight (excluding any solvents present) of the resin blend. However, it has been found that friction materials, in certain embodiments, can be improved when the mixture includes resin blend containing about 5 to about 80%, by weight, and for certain purposes, about 15 to about 55%, and in certain embodiments about 15 to about 25%, by weight, of silicone resin based on the weight of the silicone-phenolic mixture (excluding solvents and other processing acids).

Examples of useful phenolic and phenolic-silicone resins useful in the present invention are fully disclosed in the above-referenced BorgWarner U.S. patents which are fully incorporated herein, by reference. Silicone resins useful in the present invention include, for example, thermal curing silicone sealants and silicone rubbers. Various silicone resins are useful with the present invention. One resin, in particular, comprises xylene and acetylacetone (2,4-pentanedione). The silicone resin has a boiling point of about 362°F (183°C), vapor pressure at 68°F mm, Hg: 21, vapor density (air=1) of 4.8, negligible solubility in water, specific gravity of about 1.09, percent volatile, by weight, 5% evaporation rate (ether=1), less than 0.1, flash point about 149°F (65°C) using the Pensky-Martens method. It is to be understood that other silicone resins can be utilized with the present invention. Other useful resin blends include, for example, a suitable phenolic resin comprises (% by wt.): about 55 to about 60% phenolic resin; about 20 to about 25% ethyl alcohol; about 10 to about 14% phenol; about 3 to about 4% methyl alcohol; about 0.3 to about 0.8% formaldehyde; and, about 10 to about 20% water. Another suitable phenolic-based resin comprises (% by wt.): about 50 to about 55% phenol/formaldehyde resin; about 0.5% formaldehyde; about 11 % phenol; about 30 to about 35% isopropanol; and, about 1 to about 5% water.

It has also been found that another useful resin is an epoxy modified phenolic resin which contains about 5 to about 25 percent, by weight, and preferably about 10 to about 15 percent, by weight, of an epoxy compound with the remainder (excluding solvents and other processing aids) phenolic resin. The epoxy-phenolic resin compound provides, in certain embodiments, higher heat resistance to the friction material than the phenolic resin alone.

In certain embodiments, it is preferred that resin mixture comprises desired amounts of the resin and the friction modifying particles such that the target pick up of resin by the base material ranges from about 25 to about 70%, in other embodiments, from about 40 to about 65%, and, in certain embodiments, about 60 to at least 65%, by weight, total silicone-phenolic resin. After the base material is saturated with the resin, the base material is cured for a period of time (in certain embodiments for about 1/2 hour) at temperatures ranging between 300-400°C to cure the resin binder and form the friction material. The final thickness of the friction material depends on the initial thickness of the base material.

It further contemplated that other ingredients and processing aids known to be useful in both preparing resin blends and in preparing base materials can be included, and are within the contemplated scope of the present invention.

In certain embodiments, the resin mixture can comprise both the silicone resin and the phenolic resin which are present in solvents which are compatible to each other. These resins are mixed together (in preferred embodiments) to form a homogeneous blend and then used to saturate the fibrous base material. In certain embodiments, there is not the same effect if the base material is impregnated with a phenolic resin and then a silicone resin is added thereafter or vice versa. There is also a difference between a mixture of a silicone-phenolic resin solution, and emulsions of silicone resin powder and/or phenolic resin powder. When silicone resins and phenolic resins are in solution they are not cured at all. In contrast, the powder particles of silicone resins and phenolic resins are partially cured. The partial cure of the silicone resins and the phenolic resins inhibits a good saturation of the base material.

In certain embodiments of the present invention, the base material is impregnated with a blend of a silicone resin in a solvent which is compatible with the phenolic resin and its solvent. In one embodiment, isopropanol has been found to be an especially suitable solvent. It is to be understood, however, that various other suitable solvents, such as ethanol, methyl-ethyl ketone, butanol, isopropanol, toluene and the like, can be utilized in the practice of this invention. The presence of a silicone resin, when blended with a phenolic resin and used to saturate the base material, causes the resulting friction materials to be more elastic than base materials impregnated only with a phenolic resin. When pressures are applied to the silicone-phenolic resin blended impregnated friction material of the present invention, there is a more even distribution of pressure which, in turn, reduces the likelihood of uneven lining wear. After the silicone resin and phenolic resin are mixed together with the friction modifying particles, the mixture is used to impregnate the base material.

The friction material of the present invention includes a layer of friction modifying particles forming a randomly covered surface of a base material provides a friction material with good anti-shudder characteristics, high resistance, high coefficient of friction, high durability, good wear resistance and improved break-in characteristics.

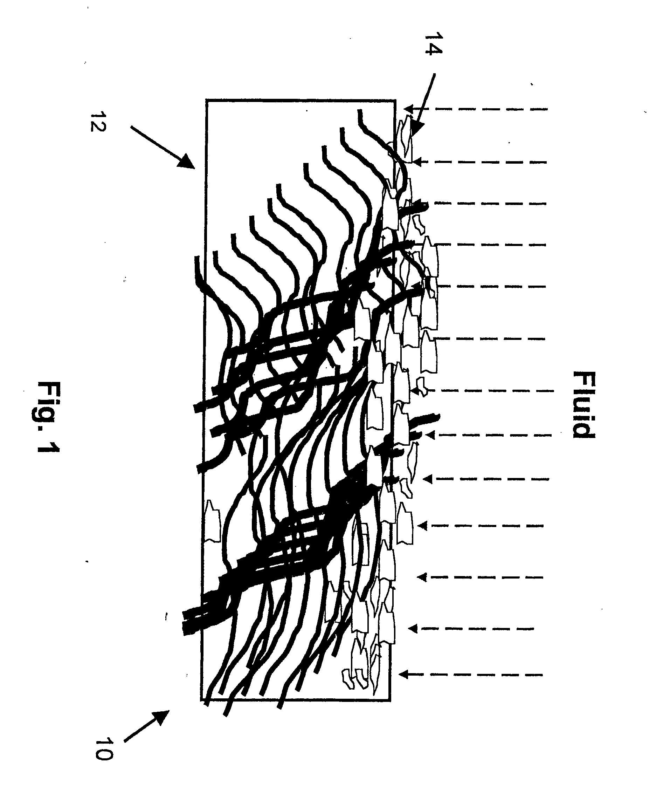

Fig. 1 shows a schematic diagram of a friction material 10 having a fibrous base material 12 and a noncontinuous, or randomly covered, layer of surface friction modifying materials 14 substantially covering the base material 12.

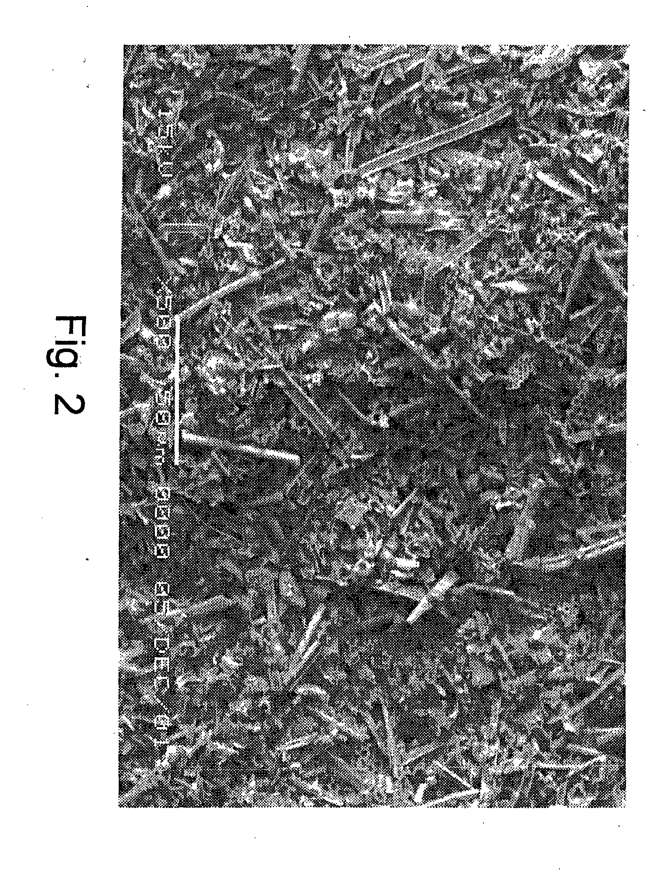

Fig. 2 is a SEM image showing Ex. 1 where the friction material has many large holes such that at least some of the lubricant does not stay on the surface of the friction material. The friction particles in the Ex. 1 formulation penetrate deeper into the fibrous base material such that surface pores remain fairly open.

The noncontinuous layer of friction modifying materials used in the porous friction material of the present invention provides the friction material with good anti-shudder characteristics. In the embodiment shown, the high temperature synthetic fibers and porosity of the base material provides improved heat resistance.

In addition, the porous friction material has relatively large pores which allow contaminants of fluids to pass through readily. This absorption of such degradation products provides the friction material with even more constant friction behaviors.

The following examples provide further evidence that the present invention provides an improvement over conventional friction materials. The friction materials have desirable coefficient of friction, heat resistance and durability characteristics. Various preferred embodiments of the invention are described in the following examples, which however, are not intended to limit the scope of the invention.

### Examples

### Example I

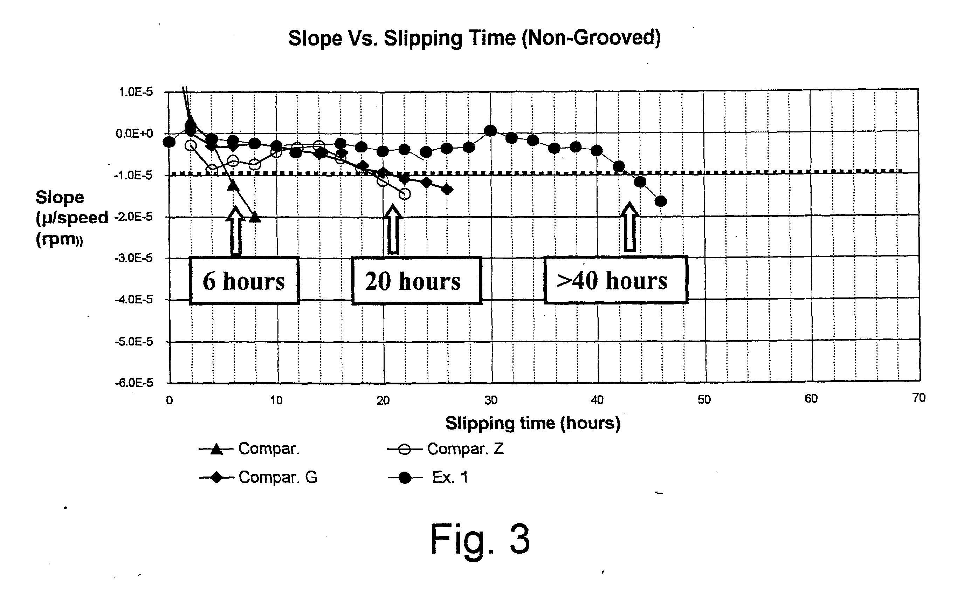

A comparison of slope v. slipping time in grooved materials for the Ex. 1, Compar. E, Compar. G, Compar. Z and the Compar. C is shown in Fig. 3. Compar. E is a commercial friction material. Compr. G is a commercial friction material formulation. Compar. Z is a friction material formulation with a dense layer of friction modifying particles as a top layer. The failure criterion of mu-v (friction coefficient to slip speed (rpm)) slope is set at -1.0*E-5, which is acceptable in the industry. A product with a slope below this level is more prone to shudder. The Ex. 1 material allows the oil flow to be within the desired conditions and allows for good dissipation of heat. The Ex. 1 material lasts for more than 40 hours before falling below the "failure criterion" while the other materials failed at between 6 and 20 hours.

### Example II

The deposit of the friction modifying particle creates a porous surface layer which does not significantly reduce permeability of the top layer. The permeability of the top friction modifying particle layer allows the fluid or lubricant to flow into the base material and not remain held at the surface of the friction material.

The Ex. 1 friction material has a normal permeability (kₙₒᵣₘₐₗ) of about 0.36 Darcy or less and a lateral permeability (kₗₐₜₑᵣₐₗ) of about 0.71 Darcy or greater. In comparison, the Compar. Z material has a normal permeability (kₙₒᵣₘₐₗ) of about 0.22 Darcy and a lateral permeability (kₘₐₜₑᵣₐₗ) of about 0.35 Darcy.

### Example III

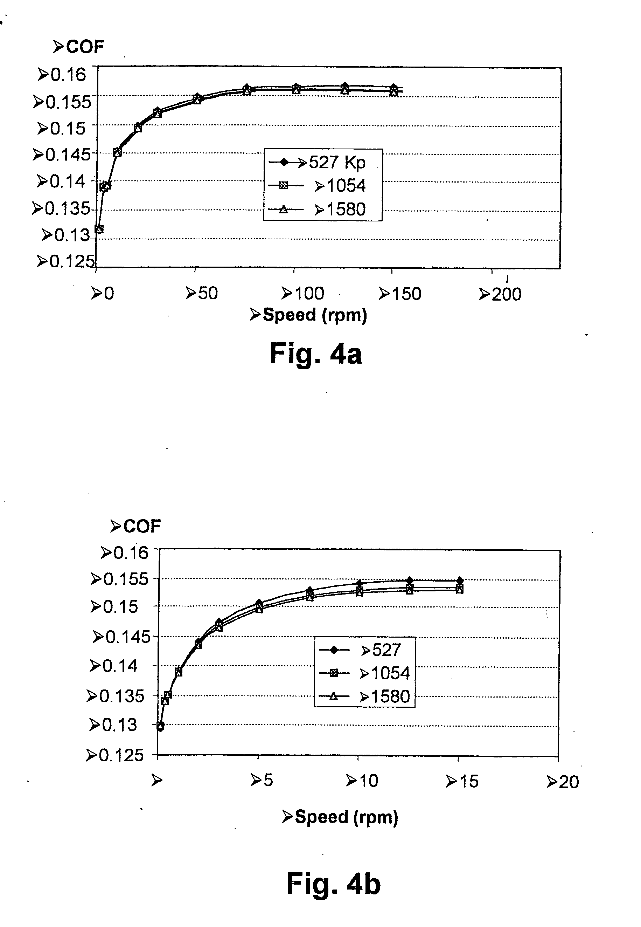

A comparison between the coefficient of friction (COF) at different pressures to the speed for the Compar. I (BWA5301), a commercial friction material, and the Ex. 1 are shown in Figs. 4a and 4b, respectively. The nonporous material, Ex. 1 has a favorable COF v. speed relationship.

### Example IV

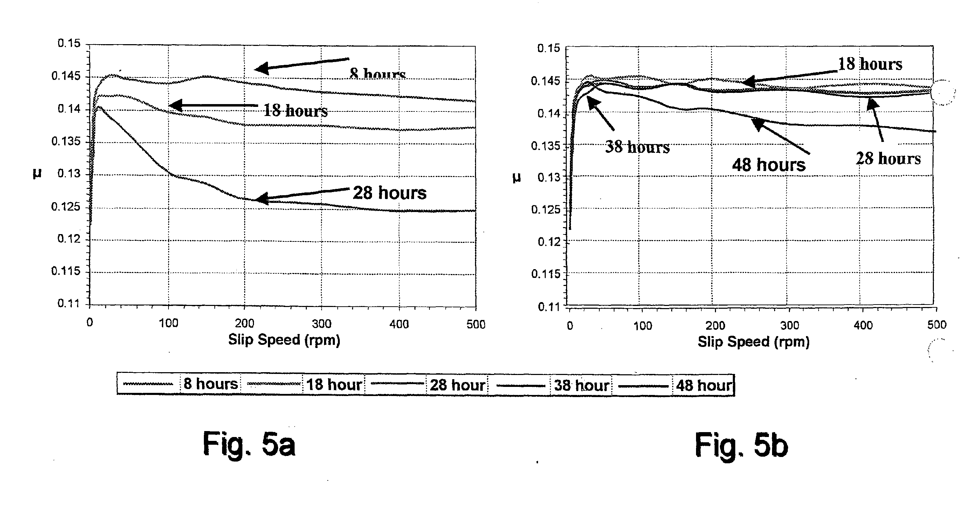

The results of a durability test for the Compar. Z and Ex. 1 formulations are shown in Figs. 5a and 5b, respectively, comparing the coefficient of friction (µ) to slip speed (rpm) for 8, 18, 28, 36 and 48 hours. While the Compar. Z material lasted over 18 hours before there was a decrease in the coefficient of friction as the slip speed increased, the Ex. 1 material lasted over 48 hours. The slight decrease to about 0.137 in the coefficient of friction as the slip speed increased of the Ex. 1 material was still better than the coefficient of friction of the Compar. Z material.

### INDUSTRIAL APPLICABILITY

The present invention is useful as a high energy friction material for use with clutch plates, transmission bands, brake shoes, synchronizer rings, friction disks or system plates.

The above descriptions of the preferred and alternative embodiments of the present invention are intended to be illustrative and are not intended to be limiting upon the scope and content of the following claims.

## Claims

1. A friction material comprising a first layer comprising a porous base material and at least one type of resin material, and a second layer comprising at least one type of friction modifying particle at least partially covering a top surface of the porous base material, the second layer having an average thickness of about 30-400 µm wherein the second layer has a fluid permeability lower than the first layer.

2. The friction material of claim 1, wherein the second layer of the friction modifying particles is formed on individual fibers and/or filler material comprising the porous base material.

3. The friction material of claim 2, wherein the second layer of the friction modifying particles on the individual fibers and/or filler material comprising the base material has a thickness of about 50 to about 100 µm on the individual fibers and/or on the individual filler material.

4. The friction material of claim 1, 2 or 3, wherein the second layer has a lower permeability in the radial direction and a lower permeability in the normal direction than the porous base material.

5. The friction material of any one of claims 1 to 4, wherein the friction modifying particle size is from about 0.5 to about 20 microns.

6. The friction material of any one of claims 1 to 5, wherein the porous base material has an average voids volume from about 65% to about 85%.

7. The friction material any one of claims 1 to 6, wherein the friction modifying particles comprise silica particles.

8. The friction material of claim 7, wherein the friction modifying particles comprise celite particles.

9. The friction material of claim 7, wherein the friction modifying particles comprise diatomaceous earth.

10. The friction material of any one of claims 1 to 6, wherein the friction modifying particles comprise a mixture of carbon particles and silica particles.

11. The friction material of claim 8, wherein the celite has an irregular shape.

12. The friction material of claim 8 or 11, wherein the particles of celite have a size ranging from about 2 to about 20 µm.

13. The friction material of any one of claims 1 to 6, wherein the friction modifying particles comprise metal oxides.

14. The friction material of any one of claims 1 to 6, wherein the friction modifying particles comprise nitrides.

15. The friction material of any one of claims 1 to 6, wherein the friction modifying particles comprise carbides.

16. The friction material of claim 1, wherein the porous base material comprises a fibrous base material.

17. The friction material of claim 1, wherein the porous base material is a nonwoven fibrous material.

18. The friction material of claim 1, wherein the porous base material is a woven fibrous material.

19. The friction material of claim 16, 17, or 18, wherein the porous fibrous base material comprises from about 15 to about 25% cotton, about 40 to about 50% aramid fibers, about 10 to about 20% carbon fibers, about 5 to about 15% carbon particles, and about 10 to about 15% celite, and optionally, about 1 to about 3% latex addon.

20. The friction material of any one of claims 16 to 19, wherein the second layer of the friction material comprises silica friction modifying particles deposited on fibers of the fibrous material and on filler material in the fibrous base material.

21. The friction material of any one of claims 16 to 20, wherein the porous fibrous base material has an average pore diameter of about 5 µm.

22. The friction material of any one of the preceding claims, wherein the resin comprises at least one phenolic resin or at least one modified phenolic resin.

23. The friction material of any one of claims 1 to 21, wherein the resin comprises a mixture of at least one phenolic resin and at least one silicone resin wherein the amount of silicone resin in the resin mixture ranges from approximately 5 to approximately 80%, by weight, based on the weight of the resin mixture.

24. A method for producing a friction material comprising
saturating a porous base material with a saturant comprising at least one resin material and at least one type of friction modifying particles, such that a plurality of the friction modifying particles form a layer on individual fibers and fillers comprising the base material, the layer of friction modifying particles having an average thickness of about 30-400 µm, wherein the second layer has a fluid permeability lower than the first layer, and
curing the saturated base material at a predetermined temperature for a predetermined period of time.

25. A method for producing a friction material comprising
preparing a saturant material comprising a mixture of at least one curable resin material and at least one type friction modifying particle,
preparing a porous base material having a plurality of interstices dispersed therethrough, and
saturating the porous base material with the saturant material whereby a plurality of the friction modifying particles is at least partially deposited on individual fibers comprising the base material and whereby the resin material is substantially evenly dispersed throughout the base material.

26. The method of claim 25, wherein the friction modifying particles form a porous layer on at least one side of the base material.
